# EUROPÄISCHE PATENTSCHRIFT

(11) **EP 1 427 602 B1**
(45) Veröffentlichungstag und Bekanntmachung des Hinweises auf die Patenterteilung: **16.11.2005**
(21) Anmeldenummer: 02772318.8
(22) Anmeldetag: 18.09.2002
(51) Int. Cl.: B60N 2/32, B60N 2/34, B60N 2/36

(54) **KRAFTFAHRZEUGRÜCKSITZ**
MOTOR VEHICLE REAR SEAT
SIEGE ARRIERE DE VEHICULE AUTOMOBILE

(30) Priorität: 21.09.2001 DE 10146711
(43) Veröffentlichungstag der Anmeldung: 16.06.2004
(73) Patentinhaber: Intier Automotive Seating (Germany) GmbH, 63762 Grossostheim (DE)
(72) Erfinder: HENNING, Werner, Ingmar, 75428 Illingen (DE)
(74) Vertreter: Pfiz, Thomas
(86) Internationale Anmeldenummer: PCT/EP2002/010454
(87) Internationale Veröffentlichungsnummer: WO 2003/026919

(56) Entgegenhaltungen:
- DE-A- 19 837 051
- US-A- 3 171 682
- US-A- 5 718 479
- US-A1- 2002 067 056

## Beschreibung

Die vorliegende Erfindung betrifft einen Kraftfahrzeugrücksitz nach dem Oberbegriff des Patentanspruches 1, der jenem nach der US-A-3 171 682 gattungsgemäß entspricht.

Kraftfahrzeugrücksitze, die die Option bieten, eine zusätzliche, sich an den dahinterliegenden Gepäckraum anschließende Ladefläche zu schaffen, sind aus dem Stand der Technik bekannt. Sie kommen hauptsächlich bei Kleinbussen, Vans etc. zur Anwendung, allerdings auch bei einfachen Personenkraftwagen. Damit die zusätzlich geschaffene Ladefläche im wesentlichen auf dem Niveau des Gepäckraumbodens liegt, ist es erforderlich, daß der Sitz in seiner Ladeposition möglichst flach baut. Diesbezüglich bereitet das gepolsterte Sitzteil des Rücksitzes Probleme, da es der Rückenlehne beim Vorklappen im Wege ist.

Zur Lösung dieses Problems wurden Rücksitze entwickelt, bei denen das Sitzteil vor dem Vorklappen der Rückenlehne aus dem Klappbereich entfernt werden kann. Derartige Konstruktionen sind beispielsweise in den Druckschriften DE-C-43 40 446 und US-A-5,730,496 beschrieben. Bei den vorgenannten Rücksitzen tritt meist das Problem auf, daß die separaten Sitzteile nach der Entnahme anderenorts lose untergebracht werden müssen.

Weitere bekannte Rücksitzkonstruktionen sehen vor, daß der gesamte Rücksitz um eine im vorderen Bereich des Sitzteiles am Fahrzeugboden angeordnete Querachse nach vorne verschwenkt wird, so daß eine zusätzliche Ladefläche entsteht, wo vorher der Rücksitz angeordnet war. Eine solche Bauweise ist beispielsweise aus der DE-A-28 49 985 und der DE-A-44 22 920 A1 bekannt. Der Nachteil dieser Bauweise besteht im wesentlichen darin, daß durch das Verschwenken zwar die Ladefläche vergrößert, aber anderenorts, nämlich dort, wo der gesamte Rücksitz hinverschwenkt wurde, wiederum sehr viel Freiraum verloren geht.

Aus dem Stand der Technik sind ferner Lösungen bekannt, bei denen das Sitzteil abgesenkt werden kann, um im Anschluß daran die Rückenlehne auf das abgesenkte Sitzteil zu klappen. In einigen Konstruktionen ist es ferner vorgesehen, die Absenkbewegung des Sitzteiles mit der Klappbewegung der Rückenlehne zu koppeln, um die Bedienung zu vereinfachen. Konstruktionen der vorgenannten Art werden beispielsweise durch die Druckschriften DE-C-199 57 380 und DE-C-199 04 009 offenbart.

Denen aus dem Stand der Technik bekannten Kraftfahrzeugrücksitzen haftet der Nachteil an, daß diese einer aufwendigen Konstruktion bedürfen, schwer bedienbar sind und hohe Produktionskosten verursachen.

Die Aufgabe der vorliegenden Erfindung besteht somit darin, einen Kraftfahrzeugrücksitz, der jenem nach der o.g. US-A-3 171 682 gattungsgemäß entspricht, zu schaffen, der einfach aufgebaut ist und somit geringe Produktionskosten verursacht, wobei die Handhabung erleichtert ist.

Die Lösung dieser Aufgabe erfolgt erfindungsgemäß anhand der im Patentanspruch 1 angegebenen Merkmale. Vorteilhafte Ausführungsformen der Erfindung sind Gegenstand der Unteransprüche.

Der gattungsgemäße Kraftfahrzeugrücksitz weist ein Sitzteil und eine Rückenlehne auf. Das Sitzteil hat eine Oberseite, wobei unter der Oberseite die nach oben weisende Fläche zu verstehen ist, auf die sich der Fahrgast setzt. Die Rückenlehne hat eine Vorderseite gegen die sich der Fahrgast lehnt und eine Rückseite, wobei die Rückseite einem Freiraum, normalerweise dem Gepäckraum, hinter dem Kraftfahrzeugrücksitz zugewandt ist. Die Rückenlehne weist mindestens einen Rückenlehnenabschnitt auf. Die Rückenlehne kann also in Längsrichtung in mehrfach, d. h. mindestens zweifach, unterteilt sein. Wenn nachfolgend von mindestens einem Rückenlehnenabschnitt die Rede ist, kann darunter auch die gesamte Rückenlehne verstanden werden, wenn die Rückenlehne einteilig ist.

In diesem Kraftfahrzgeugrücksitz ist mindestens ein Rückenlehnenabschnitt derart ausgebildet, daß dieser von einer Normalposition in eine erste Position verschwenkt werden kann, in der die Rückseite des Rückenlehnenabschnittes nach oben weist. Dieser Rückenlehnenabschnitt kann ferner mit nach oben weisender Rückseite in eine zweite Position in den Freiraum hinter dem Kraftfahrzeugsitz verschwenkt werden, so daß die Oberseite des Sitzteiles und die Rückseite des Rückenlehnenabschnittes eine Ladefläche ausbilden.

Ein wesentlicher Vorteil des erfindungsgemäßen Kraftfahrzeugrücksitzes besteht darin, daß das Sitzteil nicht mitbewegt werden muß, um die Ladefläche zu erzeugen. Dies bedeutet, daß das Sitzteil nicht entfernt, verschwenkt oder abgesenkt werden muß, was zu einer einfacheren Konstruktion führt, die einfach bedient und kostengünstig hergestellt werden kann. Darüber hinaus besteht ein weiterer Vorteil darin, daß das Ladegut auf der Rückseite des Rückenlehnenabschnittes und nicht auf dessen Vorderseite abgelegt wird, wie dies bei Rücksitzen der Fall ist, bei denen die Rückenlehne einfach zurückgeschwenkt wird.

In einer bevorzugten Ausführungsform des erfindungsgemäßen Kraftfahrzeugrücksitzes ist an der Rückseite des Rückenlehnenabschnittes eine Ladeplatte schwenkbar angeordnet. Die Ladeplatte kann, wenn der Rückenlehnenabschnitt in die zweite Position verschwenkt ist, auf die Oberseite des Sitzteiles verschwenkt werden. Dies ist insofern von Vorteil, da die Oberseite des Sitzteiles durch die Ladeplatte gegenüber dem Ladegut geschützt ist. Eine Verschmutzung oder Beschädigung des Sitzteiles wird dadurch vermieden.

In einer besonders bevorzugten Ausführungsform des erfindungsgemäßen Kraftfahrzeugrücksitzes weist der Rückenlehnenabschnitt eine Rückwand und eine Armlehne auf. Die Armlehne kann in der Normalposition des Rückenlehnenabschnittes auf die Oberseite des Sitzteiles verschwenkt werden, während die Rückwand in den Freiraum hinter dem Kraftfahrzeugrücksitz verschwenkt werden kann. Auf diese Weise entsteht eine Durchreiche zwischen dem Freiraum bzw. Gepäckraum und dem Fahrgastraum. Sperrige Gegenstände, wie beispielsweise Skier, können auf diese Weise transportiert werden, wobei gleichzeitig eine Sitzmöglichkeit auf dem Kraftfahrzeugrücksitz verbleibt. Darüber hinaus kann auch lediglich die Armlehne auf das Sitzteil verschwenkt werden, während die Rückwand in einer aufrechten Position verbleibt und die Durchreiche verschließt, sofern lediglich die Funktion der Armlehne genutzt werden soll. In diesem Fall ist der Fahrgast gegenüber den im Frei- bzw. Gepäckraum gelagerten Gegenständen durch die Rückwand geschützt.

In einer weiteren bevorzugten Ausführungsform der vorliegenden Erfindung kann der Rückenlehnenabschnitt ferner von der Normalposition in eine dritte Position verschwenkt werden. In dieser dritten Position bilden die Oberseite des Sitzteiles und die Vorderseite des Rückenlehnenabschnittes eine Liegefläche aus, so daß eine Schlafgelegenheit entsteht.

Der erfindungsgemäße Kraftfahrzeugsitz weist in einer bevorzugten Ausführungsform eine Schwenkeinrichtung auf, die einerseits am Fahrzeugboden unter Bildung einer ersten Schwenkachse befestigt ist, um die der Rückenlehnenabschnitt in die zweite und dritte Position verschwenkt werden kann, und andererseits mit dem Rückenlehnenabschnitt unter Bildung einer zweiten Schwenkachse verbunden ist, um die der Rückenlehnenabschnitt in die erste Position verschwenkt werden kann.

Vorteilhafterweise sind in einer weiteren bevorzugten Ausführungsform des Kraftfahrzeugsitzes jeweils Arretierungsmittel zum Unterbinden des Verschwenkens um die erste und zweite Schwenkachse vorgesehen. Auf diese Weise ist der Rückenlehnenabschnitt in den jeweiligen Positionen weitgehend arretierbar.

In einer besonders bevorzugten Ausführungsform des erfindungsgemäßen Kraftfahrzeugsitzes wirken die Schwenkeinrichtung und der Rückenlehnenabschnitt derart zusammen, daß der Rückenlehnenabschnitt beim Verschwenken von der ersten in die zweite Position lediglich in einer Drehrichtung um die zweite Schwenkachse aus seiner Ausrichtung mit nach oben weisender Rückseite verschwenkt werden kann. Dies ermöglicht der Bedienungsperson ein einfaches Verschwenken des Rückenlehnenabschnittes von der ersten in die zweite Position.

Die Schwenkeinrichtung des erfindungsgemäßen Kraftfahrzeugsitzes weist vorzugsweise einen ersten Schenkel, der am Fahrzeugboden befestigt ist, einen zweiten parallelen Schenkel, der gelenkig mit dem Rückenlehnenabschnitt verbunden ist, und einen dritten und vierten Schenkel auf, die parallel zueinander angeordnet und jeweils einerseits mit dem ersten und andererseits mit dem zweiten Schenkel verbunden sind. Eine derartige Ausbildung der Schwenkeinrichtung gewährleistet unter anderem eine besonders leichte Bauweise.

In einer besonders bevorzugten Ausführungsform des erfindungsgemäßen Kraftfahrzeugsitzes weist der zweite Schenkel ein Anschlagelement auf, das in einer um die zweite Schwenkachse angeordneten Führung in dem Rückenlehnenabschnitt geführt ist. Das Anschlagelement und die Führung wirken derart zusammen, daß der Rückenlehnenabschnitt in seiner Ausrichtung mit nach oben weisender Rückseite lediglich in einer Drehrichtung um die zweite Schwenkachse verschwenkt werden kann. Neben der leichten Bauweise der Schwenkeinrichtung ist somit ein einfaches Verschwenken des Rückenlehnenabschnittes von der ersten in die zweite Position gewährleistet.

In einer weiteren bevorzugten Ausführungsform des erfindungsgemäßen Kraftfahrzeugsitzes wirken das Anschlagelement und die Führung derart zusammen, daß der Rückenlehnenabschnitt in Normalposition lediglich in einer Drehrichtung um die zweite Schwenkachse aus seiner Ausrichtung verschwenkt werden kann. Auf diese Weise braucht kein weiteres Anschlagelement vorgesehen werden, um die Bewegung des Rückenlehnenabschnittes nach dem Zurückverschwenken von der ersten Position in die Normalposition zu beenden.

Im folgenden wird die Erfindung anhand von Ausführungsbeispielen unter Bezugnahme auf die beigefügten Figuren eingehender erläutert.

Es zeigen:
- Fig. 1: eine schematische Seitenansicht des erfindungsgemäßen Kraftfahrzeugrücksitzes mit dem Rückenlehnenabschnitt in der Normalposition,
- Fig. 2: den Kraftfahrzeugrücksitz von Fig. 1 mit dem Rückenlehnenabschnitt in der ersten Position,
- Fig. 3: den Kraftfahrzeugrücksitz von Fig. 1 bzw. 2 mit dem Rückenlehnenabschnitt in der zweiten Position,
- Fig. 4: den Kraftfahrzeugrücksitz von Fig. 1, 2 bzw. 3 mit verschwenkter Ladeplatte,
- Fig. 5: den Kraftfahrzeugrücksitz von Fig. 1 mit dem Rückenlehnenabschnitt in der dritten Position,
- Fig. 6: den Kräftfahrzeugrücksitz von Fig. 1 mit verschwenkter Armlehne und verschwenkter Rückwand,
- Fig. 7: eine detaillierte, perspektivische Darstellung der Schwenkeinrichtung und des Rückenlehnenabschnittes von Fig. 1,
- Fig. 8: eine detaillierte, perspektivische Darstellung der Schwenkeinrichtung und des Rückenlehnenabschnittes von Fig. 2,
- Fig. 9: eine detaillierte, perspektivische Darstellung der Schwenkeinrichtung und des Rückenlehnenabschnittes von Fig. 3,
- Fig. 10: eine detaillierte, perspektivische Darstellung der Schwenkeinrichtung in der Position in Fig. 7 und
- Fig. 11: eine detaillierte, perspektivische Darstellung der Schwenkeinrichtung in der Position in Fig. 9.

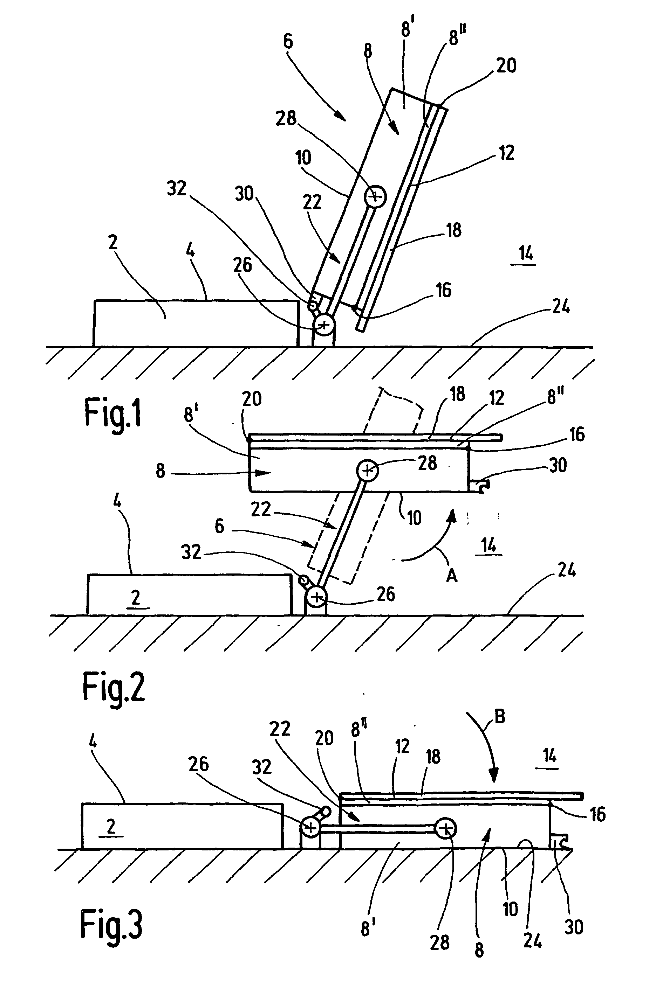

Fig. 1 zeigt eine Seitenansicht des erfindungsgemäßen Kraftfahrzeugrücksitzes in schematischer Darstellung. Der Kraftfahrzeugrücksitz weist ein Sitzteil 2 auf, das im Kraftfahrzeug befestigt ist und eine nach oben weisende Oberseite 4 aufweist, auf die sich ein nicht dargestellter Fahrgast setzen kann. Es ist ferner eine Rückenlehne 6 vorgesehen, die mindestens einen Rückenlehnenabschnitt 8 aufweist, der in Fig. 1 in der Normalposition gezeigt ist, in der sich der sitzende Fahrgast gegen die winklig zum Sitzteil 4 ausgerichtete Rückenlehne 6 lehnen kann. Die Rückenlehne 6 weist eine dem Fahrgast zugewandte Vorderseite 10 und eine Rückseite 12 auf, die einem Freiraum 14 hinter dem Kraftfahrzeugrücksitz zugewandt ist.

Der Rückenlehnenabschnitt 8 ist sandwichartig aufgebaut, d. h. er setzt sich aus einer vorderseitigen Polsterung 8' und einer rückseitigen Rückwand 8" zusammen. Die Rückwand 8" ist über ein unteres erstes Gelenk 16 schwenkbar mit dem Rückenlehnenabschnitt 8 verbunden und erstreckt sich über die gesamte Höhe des Rückenlehnenabschnittes 8. An der Rückseite 12 des Rückenlehnenabschnittes 8 und somit an der Rückwand 8" ist eine Ladeplatte 18 über ein oberes zweites Gelenk 20 schwenkbar mit dem Rückenlehnenabschnitt 8 verbunden. Die Ladeplatte 18 ist länger als die Rückwand 8" ausgebildet, so daß sie nach unten übersteht. Sowohl die Rückwand 8" als auch die Ladeplatte 18 sind in ihrer, in Fig. 1 dargestellten relativen Position zu dem Rückenlehnenabschnitt 8 lösbar befestigt, wobei auf die Darstellung der Befestigungsmittel aus Gründen der Übersichtlichkeit verzichtet wurde.

Ein Verschwenken des Rückenlehnenabschnittes 8 wird durch eine Schwenkeinrichtung 22 ermöglicht, die einerseits am Fahrzeugboden 24 unter Bildung einer ersten Schwenkachse 26 und andererseits seitlich mit dem Rückenlehnenabschnitt 8 unter Bildung einer zweiten Schwenkachse 28 verbunden ist. Um ein Verschwenken des Rückenlehnenabschnittes 8 aus der Normalposition zu verhindern, ist ein erstes Arretierungsmittel 30 vorgesehen, das an dem Rückenlehnenabschnitt 8 angeordnet ist und mit einem Gegenstück 32 an der Schwenkeinrichtung 22 lösbar verbunden ist, so daß ein Verschwenken um die zweite Schwenkachse 28 unterbunden wird, und ein zweites lösbares Arretierungsmittel (in Fig. 1 nicht dargestellt) vorgesehen, das an der Schwenkeinrichtung 22 angeordnet ist und ein Verschwenken um die erste Schwenkachse 26 unterbindet.

Im folgenden wird unter Bezugnahme auf die Fig. 1 bis 4 die Vorgehensweise zur Schaffung einer Ladefläche beschrieben. Zuerst wird das Arretierungsmittel 30 von dem Gegenstück 32 gelöst, wodurch ein Verschwenken des Rückenlehnenabschnittes 8 in Richtung des Pfeiles A (Fig. 2) möglich ist. Das Verschwenken aus der Normalposition in einer anderen Drehrichtung wird durch die besondere Ausbildung von Schwenkeinrichtung 22 und Rückenlehnenabschnitt 8 im Bereich der zweiten Schwenkachse 28 unterbunden. Das Verschwenken in Richtung des Pfeiles A wird bis zu einer Ausrichtung des Rückenlehnenabschnittes 8 durchgeführt, in der die Rückseite 12 des Rückenlehnenabschnittes 8 nach oben weist und der Rückenlehnenabschnitt 8 im wesentlichen parallel zu dem Sitzteil 2 und dem Fahrzeugboden 14 angeordnet ist. In dieser in Fig. 2 dargestellten ersten Position, kann der Rückenlehnenabschnitt 8 nicht weiter in Richtung des Pfeiles A verschwenkt werden, was ebenfalls auf die besondere Ausbildung von Schwenkeinrichtung 22 und Rückenlehnenabschnitt 8 im Bereich der zweiten Schwenkachse 28 zurückzuführen ist.

Hat der Rückenlehnenabschnitt 8 die in Fig. 2 dargestellte erste Position erreicht, wird das zweite Arretierungsmittel (nicht dargestellt) gelöst, so daß der Rückenlehnenabschnitt 8 um die erste Schwenkachse 26 verschwenkt werden kann. Um den Rückenlehnenabschnitt 8 in Richtung des Pfeiles B (Fig. 3) zu verschwenken, muß die Bedienungsperson den Rückenlehnenabschnitt 8 nach unten in Richtung des Fahrzeugbodens 14 drücken. Hierbei muß die Bedienungsperson lediglich Druck auf die Rückseite Rückenlehnenabschnittes 8, ausüben, wobei dies problemlos in dem Bereich erfolgen kann, in dem das zweite Gelenk 20 angeordnet ist, da der Rückenlehnenabschnitt 8 aufgrund der Ausbildung von Schwenkeinrichtung 22 und Rückenlehnenabschnitt 8 lediglich in einer Drehrichtung um die zweite Schwenkachse 28 aus seiner Ausrichtung mit nach oben weisender Rückseite 12 verschwenkt werden kann. Auf diese Weise wird der Rückenlehnenabschnitt 8 in gleichbleibender Ausrichtung nach unten in die in Fig. 3 dargestellte zweite Position verschwenkt.

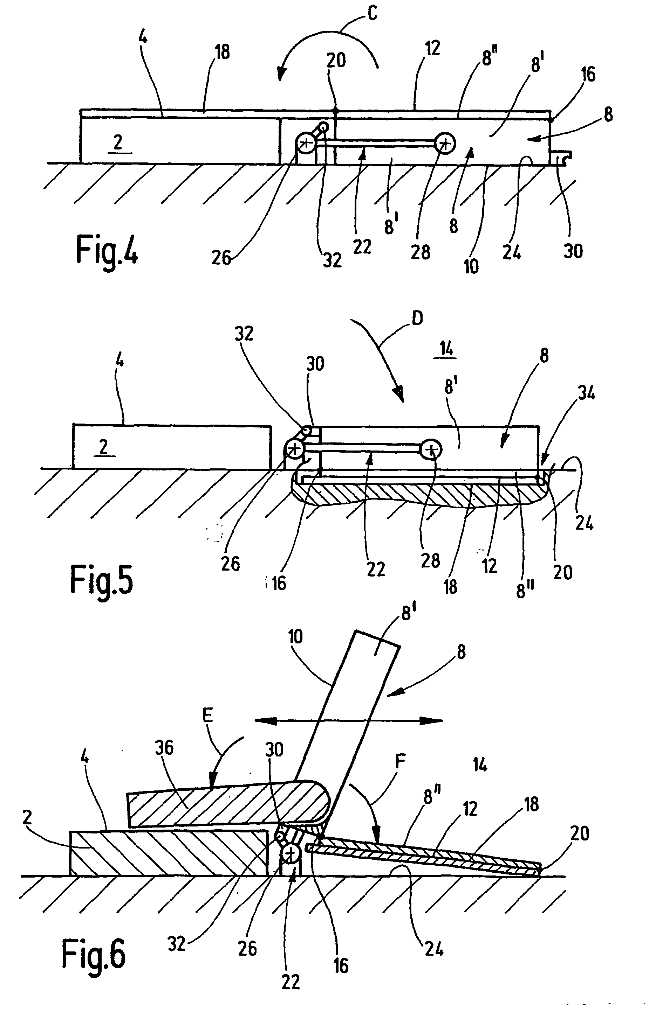

In der zweiten Position ist bereits eine Ladefläche ausgebildet. Um allerdings die Oberseite 4 des Sitzteiles 2 gegenüber dem nicht dargestellten Ladegut zu schützen, wird die Ladeplatte 18 um das zweite Gelenk 20 auf die Oberseite 4 des Sitzteiles 2 verschwenkt, wie dies in Fig. 4 anhand des Pfeiles C dargestellt ist. Um letztlich wieder in die in Fig. 1 dargestellte Position zu gelangen werden die oben genannten Schritte in umgekehrter Reihenfolge durchgeführt.

In Fig. 5 ist der Kraftfahrzeugrücksitz aus den Fig. 1 bis 4 mit einem bevorzugten Merkmal dargestellt. Um auch eine Liegefläche, wie beispielsweise eine Schlafgelegenheit, zu schaffen, kann die Bedienungsperson das zweite Arrtierungsmittel (nicht dargestellt) lösen, so daß der Rückenlehnenabschnitt 8 um die erste Schwenkachse 26 in Richtung des Pfeiles D verschwenkt werden kann. Durch das Verschwenken gelangt der Rückenlehnenabschnitt in eine dritte Position, in der die Rückseite 12 des Rückenlehnenabschnitts 8 nach unten weist und die Oberseite 4 des Sitzteiles 2 und die Vorderseite 10 des Rückenlehnenabschnittes 8 unter Bildung der Liegefläche im wesentlichen in einer Ebene angeordnet sind. Damit Oberseite 4 und Vorderseite 10 möglichst in einer Ebene angeordnet sind, ist in dem Fahrzeugboden vorteilhafterweise eine Vertiefung 34 vorgesehen, die beispielsweise durch Entnahme einer Einlegeplatte (nicht dargestellt) im Fahrzeugboden 24 erzeugt werden kann, so daß die Rückwand 8" und die Ladeplatte 18 in der dritten Position des Rückenlehnenabschnittes in der Vertiefung 34 aufgenommen werden können.

In Fig. 6 ist der Kraftfahrzeugrücksitz aus den Fig. 1 bis 5 mit einem weiteren bevorzugten Merkmal dargestellt. Der Rückenlehnenabschnitt 8 weist neben der Rückwand 8" eine Armlehne 36 auf, die in Normalposition des Rückenlehnenabschnitts 8 auf die Oberseite 4 des Sitzteiles 2 geklappt werden kann, wie dies anhand des Pfeiles E erkennbar ist. In dieser Position hat der Fahrgast die Möglichkeit, seinen Arm auf der Armlehne 36 abzustützen. Darüber hinaus kann die Rückwand 8" um das Gelenk 16 in den Freiraum 14 auf den Fahrzeugboden 24 verschwenkt werden, wie dies anhand des Pfeiles F angedeutet ist. Auf diese Weise entsteht eine Durchreiche für langgestrecktes Ladegut, wie beispielsweise Skier, wobei auf dem Kraftfahrzeugrücksitz weiterhin eine Sitzmöglichkeit für Fahrgäste verbleibt.

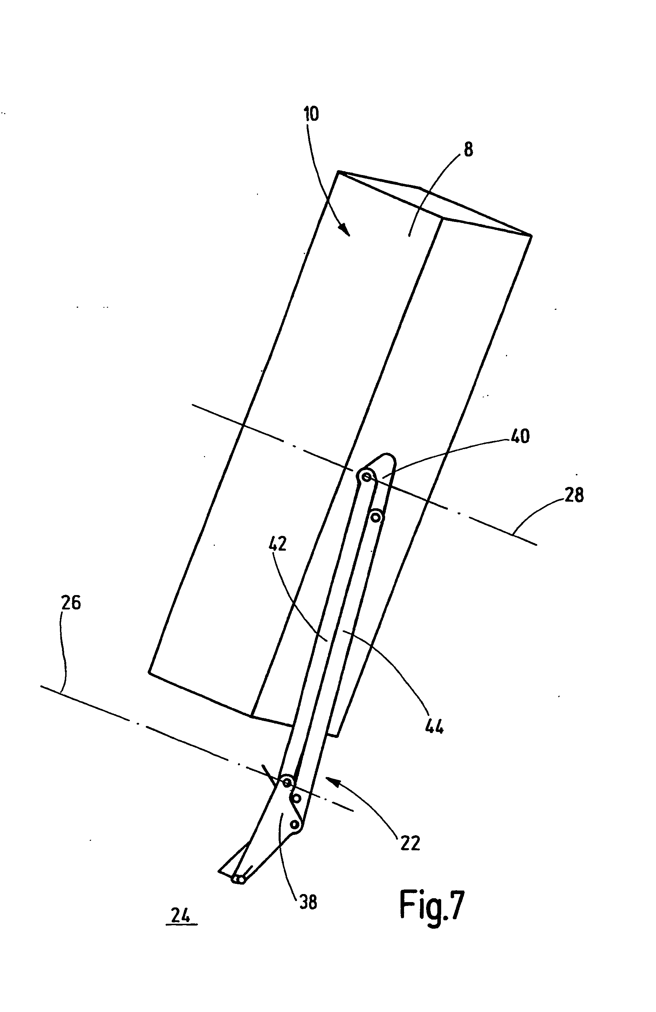

In den Fig. 7 bis 11 sind einzelne Bauteile des zuvor beschriebenen Kraftfahrzeugrücksitzes detailliert dargestellt, wobei die gezeigten Bauteile vorteilhaft ausgebildet aber dennoch beispielhaft, also nicht einschränkend, zu verstehen sind.

In Fig. 7 ist die Schwenkeinrichtung 22 und der Rückenlehnenabschnitt 8 in der Normalposition dargestellt, wobei der Rückenlehnenabschnitt 8 lediglich schematisch angedeutet ist. Die Schwenkeinrichtung 22 weist einen ersten Schenkel 38, der am Fahrzeugboden 24 befestigt ist, und einen zweiten parallelen Schenkel 40 auf, der gelenkig mit dem Rückenlehnenabschnitt 8 verbunden ist, um die zweite Schwenkachse 28 auszubilden. Ferner sind ein dritter Schenkel 42 und ein vierter Schenkel 44 vorgesehen, die parallel zueinander angeordnet, gleich lang und jeweils einerseits mit dem ersten Schenkel 38 und andererseits mit dem zweiten Schenkel 40 gelenkig verbunden sind. Die vier Schenkel 38, 40, 42, 44 bilden somit ein Parallelogramm aus, das gleichlange gegenüberliegende Schenkel 38, 40 und 42, 44 aufweist. Als erste Schwenkachse 26 kann die Verbindungsstelle zwischen erstem und drittem Schenkel 38, 42 angesehen werden. Eine derartige Schwenkeinrichtung 22 wird auch als "Storchenschnabel" bezeichnet.

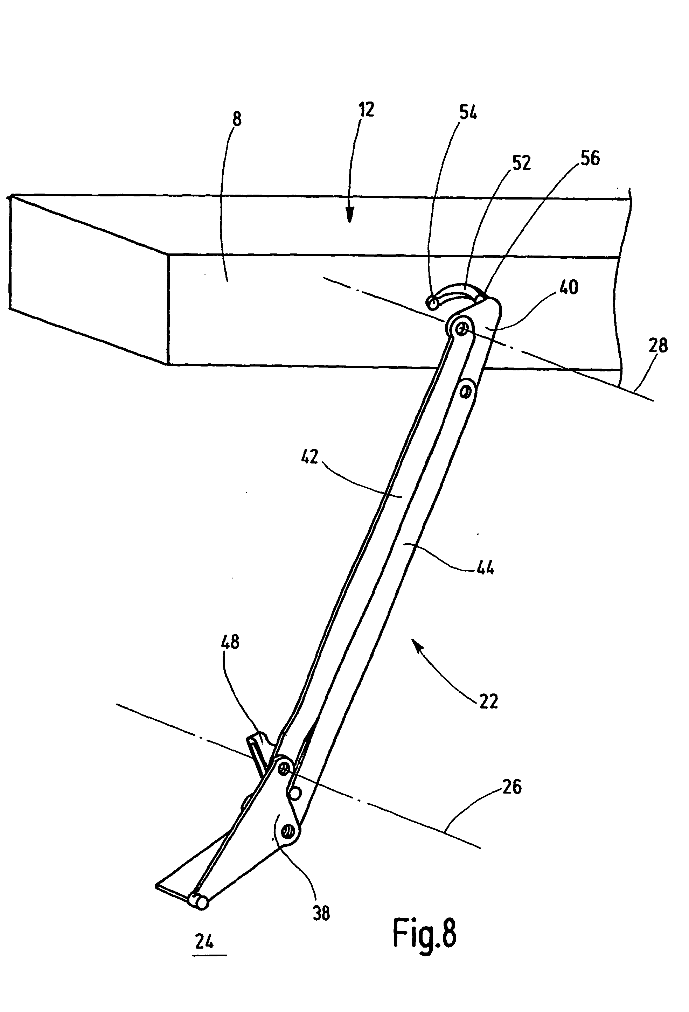

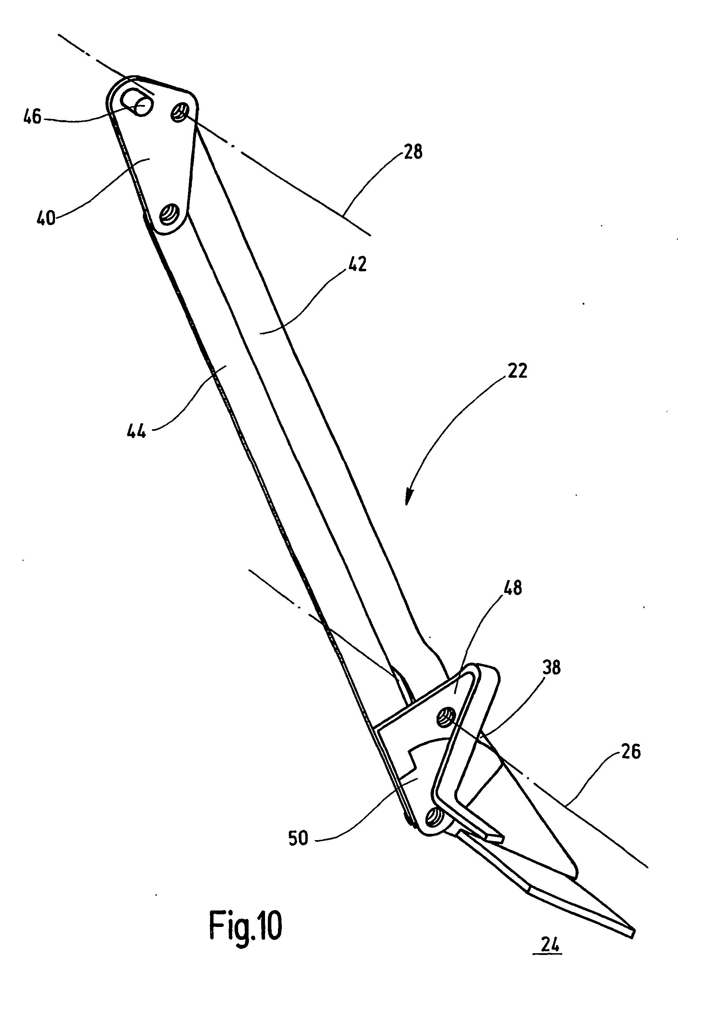

Fig. 10 zeigt die Schwenkeinrichtung aus Fig. 7 allein und aus einer anderen Perspektive. In dieser Perspektive ist zu erkennen, daß der zweite Schenkel 40 ein dem Rückenlehnenabschnitt 8 zugewandtes Anschlagelement 46 aufweist, das in einer Führung im Rückenlehnenabschnitt 8, die unter Bezugnahme auf die Fig. 8 eingehender beschrieben wird, geführt ist. In Fig. 10 ist weiterhin das zweite Arretierungsmittel 48 dargestellt, auf das in den Fig. 1 bis 5 darstellerisch verzichtet wurde. Das zweite Arretierungsmittel 48 ist als verschwenkbarer Haken ausgebildet, der in der in den Fig. 7 und 10 dargestellten geschlossenen Position ein zweites Gegenstück 50, das an dem vierten Schenkel 44 fest angeordnet ist, hintergreift und somit ein Verschwenken des Rückenlehnenabschnitts 8 um die erste Schwenkachse 26 unterbindet.

In Fig. 8 sind Schwenkeinrichtung 22 und Rückenlehnenabschnitt 8 aus Fig. 7 in der ersten Position des Rückenlehnenabschnitts 8 dargestellt. Das Arretierungsmittel 48 wurde nicht gelöst, so daß der Rückenlehnenabschnitt 8 lediglich um die zweite Schwenkachse 28 verschwenkt wurde. In Fig. 8 ist nun auch die Führung 52 zu erkennen, die in dem Rückenlehnenabschnitt 8 vorgesehen ist und in die das Anschlagelement 46 (Fig. 10) hineinragt. Die Führung 52 ist als langgestreckte Vertiefung ausgebildet, die die zweite Schwenkachse 28 kreisbogenförmig umgibt. Das Anschlagelement 46 ist durch das Verschwenken des Rückenlehnenabschnitts 8 von der Normalposition in die erste Position, von einer ersten Anschlagposition 54, die in Fig. 8 getrichelt dargestellt ist, in eine zweite Anschlagposition 56 geführt worden. In der ersten Position des Rückenlehnenabschnitts 8 ist der Rückenlehnenabschnitt 8 somit nur noch in einer Drehrichtung um die zweite Schwenkachse 28 verschwenkbar.

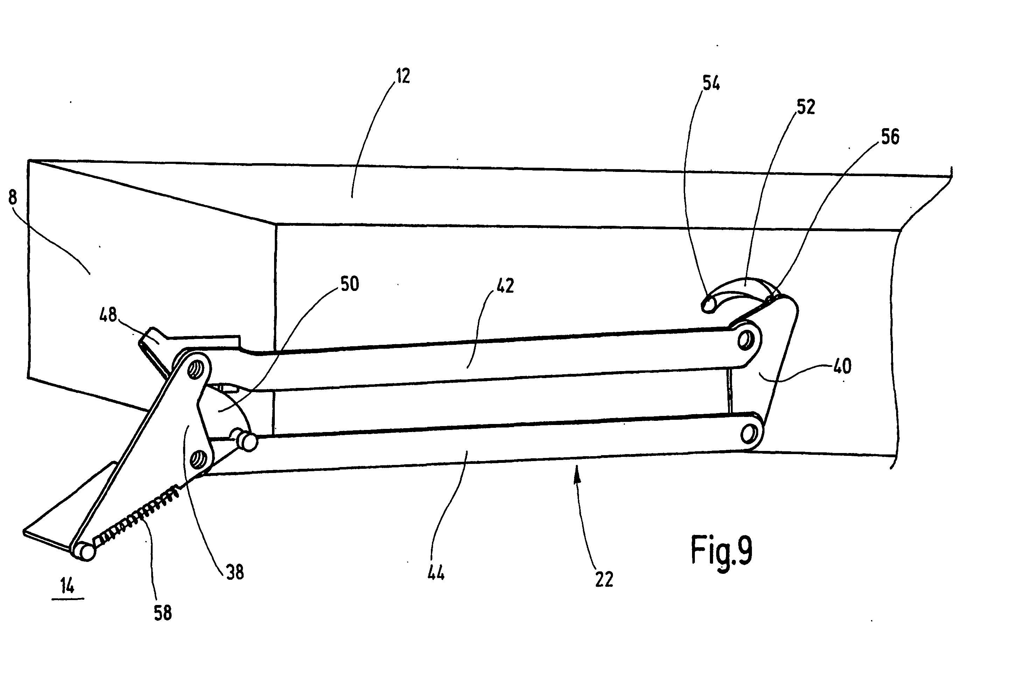

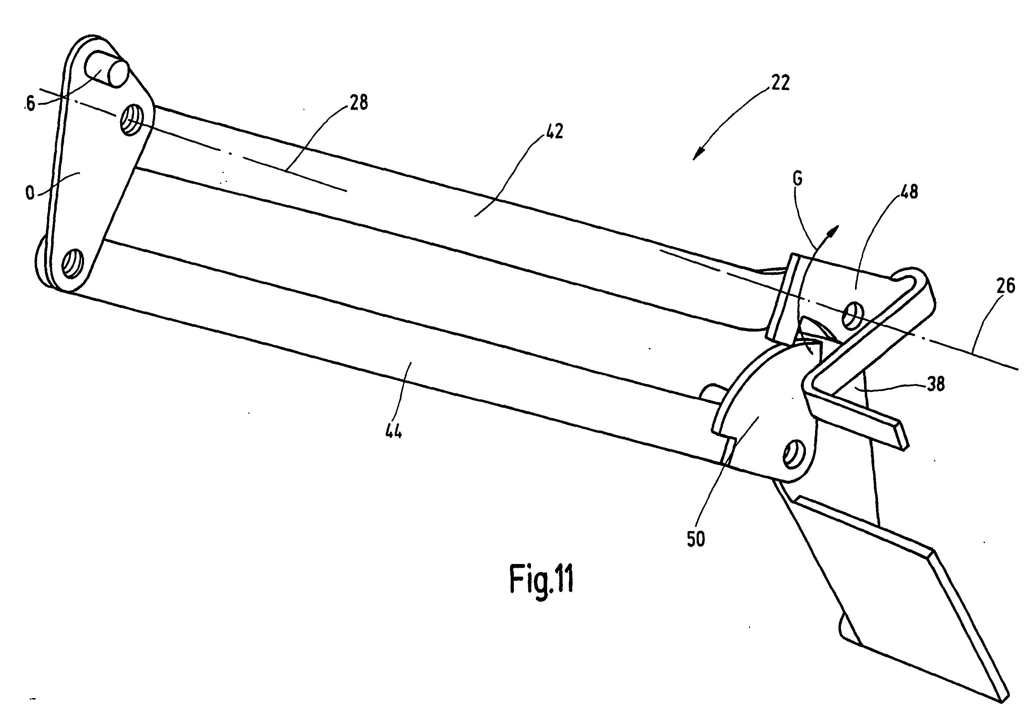

Um den Rückenlehnenabschnitt 8 in die zweite Position, die in Fig. 9 dargestellt ist, zu verschwenken, muß zunächst das zweite Arretierungsmittel 48 von dem zweiten Gegenstück 50 gelöst werden, wie dies in Fig. 11 anhand des Pfeiles G veranschaulicht ist. Danach wird der Rückenlehnenabschnitt 8 niedergedrückt, d. h. um die erste Schwenkachse 26 verschwenkt. Dank der parallelogrammartigen Ausbildung der Schwenkeinrichtung 22 verbleibt der zweite Schenkel 40 in paralleler Ausrichtung zu dem ersten Schenkel 38, so daß das Anschlagelement 46 in der zweiten Anschlagposition 56 verbleibt. Dadurch wird das Verschwenken des Rückenlehnenabschnitts 8 in paralleler Ausrichtung zu dem Fahrzeugboden 14 erleichtert, da der Rückenlehnenabschnitt 8 lediglich in einer Drehrichtung um die zweite Schwenkachse 28 aus seiner Ausrichtung mit nach oben weisender Rückseite 12 verschwenkt werden kann. Somit gelangt der Rückenlehnenabschnitt 8 in die in Fig. 9 dargestellte zweite Position, wodurch eine Ladefläche geschaffen ist.

Wie in Fig. 9 dargestellt, ist der vierte Schenkel 44 der Schwenkeinrichtung 22 gegenüber dem Fahrzeugboden 14 mittels eines Federelementes 58 federnd vorgespannt, wobei das Federelement 58 in der vorliegenden Ausführungsform von einer Zugfeder gebildet ist, die sich zwischen dem ersten Schenkel 38 und dem vierten Schenkel 44 erstreckt.

## Patentansprüche

1. Kraftfahrzeugrücksitz mit einem Sitzteil (2), das eine Oberseite (4) aufweist, und einer Rückenlehne (6), die eine Vorderseite (10) und eine einem Freiraum hinter dem Kraftfahrzeugrücksitz zugewandte Rückseite (12) sowie mindestens einen Rückenlehnenabschnitt (8) aufweist, wobei der Rückenlehnenabschnitt (8) derart ausgebildet ist, dass dieser von einer Normalposition in eine erste Position verschwenkbar ist, in der die Rückseite (12) des Rückenlehnenabschnittes (8) nach oben weist, und ferner mit nach oben weisender Rückseite (12) in eine zweite Position in den Freiraum hinter dem Kraftfahrzeugsitz verschwenkbar ist, **dadurch gekennzeichnet, dass** in der zweiten Position die Oberseite (4) des nicht mitbewegten Sitzteiles (2) und die Rückseite (12) des Rückenlehnenabschnittes (8) eine Ladefläche ausbilden.

2. Kraftfahrzeugrücksitz nach Anspruch 1, **dadurch gekennzeichnet, daß** an der Rückseite (12) des Rückenlehnenabschnittes (8) eine Ladeplatte (18) schwenkbar angeordnet ist, die in der zweiten Position des Rückenlehnenabschnittes (8) auf die Oberseite (4) des Sitzteiles (2) schwenkbar ist.

3. Kraftfahrzeugrücksitz nach einem der Ansprüche 1 oder 2, **dadurch gekennzeichnet, daß** der Rückenlehnenabschnitt (8) eine Rückwand (8") und eine Armlehne (36) aufweist, wobei die Armlehne (36) in der Normalposition des Rückenlehnenabschnittes (8) auf die Oberseite (4) des Sitzteiles (2) und die Rückwand (8") in den Freiraum verschwenkbar ist.

4. Kraftfahrzeugrücksitz nach einem der vorangehenden Ansprüche, **dadurch gekennzeichnet, daß** der Rückenlehnenabschnitt (8) ferner von der Normalposition in eine dritte Position verschwenkbar ist, in der die Oberseite (4) des Sitzteiles (2) und die Vorderseite (10) des Rückenlehnenabschnittes (8) eine Liegefläche ausbilden.

5. Kraftfahrzeugsitz nach einem der vorangehenden Ansprüche, **dadurch gekennzeichnet, daß** eine Schwenkeinrichtung (22) vorgesehen ist, die einerseits am Fahrzeugboden unter Bildung einer ersten Schwenkachse (26) befestigt ist, um die der Rückenlehnenabschnitt (8) in die zweite und dritte Position verschwenkbar ist, und andererseits mit dem Rückenlehnenabschnitt (8) unter Bildung einer zweiten Schwenkachse (28) verbunden ist, um die der Rückenlehnenabschnitt (8) in die erste Position verschwenkbar ist.

6. Kraftfahrzeugsitz nach Anspruch 5, **dadurch gekennzeichnet, daß** jeweils Arretierungsmittel (30; 48) zum Unterbinden des Verschwenkens um die erste und zweite Schwenkachse (26; 28) vorgesehen sind.

7. Kraftfahrzeugsitz nach einem der Ansprüche 5 bis 6, **dadurch gekennzeichnet, daß** die Schwenkeinrichtung (22) und der Rückenlehnenabschnitt (8) derart zusammenwirken, daß der Rückenlehnenabschnitt (8) beim Verschwenken von der ersten in die zweite Position lediglich in einer Drehrichtung um die zweite Schwenkachse (28) aus seiner Ausrichtung mit nach oben weisender Rückseite (12) verschwenkbar ist.

8. Kraftfahrzeugsitz nach einem der Ansprüche 5 bis 7, **dadurch gekennzeichnet, daß** die Schwenkeinrichtung (22) einen ersten Schenkel (38), der am Fahrzeugboden befestigt ist, einen zweiten parallelen Schenkel (40), der gelenkig mit dem Rückenlehnenabschnitt (8) verbunden ist, und einem dritten und vierten Schenkel (42; 44), die parallel zueinander angeordnet und jeweils einerseits mit dem ersten Schenkel (38) und andererseits mit dem zweiten Schenkel (40) verbunden sind, aufweist.

9. Kraftfahrzeugsitz nach Anspruch 8, **dadurch gekennzeichnet, daß** der zweite Schenkel (40) ein Anschlagelement (46) aufweist, das in einer um die zweite Schwenkachse (28) angeordneten Führung (52) in dem Rückenlehnenabschnitt geführt ist, wobei das Anschlagelement (46) und die Führung (52) derart zusammenwirken, daß der Rückenlehnenabschnitt (8) in seiner Ausrichtung mit nach oben weisender Rückseite (12) lediglich in einer Drehrichtung um die zweite Schwenkachse (28) verschwenkbar ist.

10. Kraftfahrzeugsitz nach Anspruch 9, **dadurch gekennzeichnet, daß** das Anschlagelement (46) und die Führung (52) derart zusammenwirken, daß der Rückenlehnenabschnitt (8) in Normalposition lediglich in einer Drehrichtung um die zweite Schwenkachse (28) aus seiner Ausrichtung verschwenkbar ist.

## Claims

1. Vehicle rear seat with a seat part (2) which comprises an upper side (4) and with a backrest (6) which comprises a front side (10) and a rear side (12) facing a free space behind the vehicle rear seat and at least one backrest portion (8), the backrest portion (8) being configured such that it may be pivoted from a normal position into a first position in which the rear side (12) of the backrest portion (8) is oriented upwardly and, furthermore, may be pivoted with the upwardly oriented rear side (12) into a second position into the free space behind the vehicle seat, **characterised in that** in the second position the upper side (4) of the seat part (2) which is not moved and the rear side (12) of the backrest portion (8) form a loading area.

2. Vehicle rear seat according to claim 1, **characterised in that** a loading plate (18) is pivotally arranged on the rear side (12) of the backrest portion (8) and which, in the second position of the backrest portion (8), may be pivoted onto the upper side (4) of the seat part (2).

3. Vehicle rear seat according to either of claims 1 or 2, **characterised in that** the backrest portion (8) comprises a rear wall (8") and an arm rest (36), the arm rest (36) being pivotable in the normal position of the backrest portion (8) onto the upper side (4) of the seat part (2) and the rear wall (8") into the free space.

4. Vehicle rear seat according to any one of the preceding claims, **characterised in that** the backrest portion (8) may, furthermore, be pivoted from the normal position into a third position in which the upper side (4) of the seat part (2) and the front side (10) of the backrest portion (8) form a reclining surface.

5. Vehicle seat according to any one of the preceding claims, **characterised in that** a pivoting device (22) is provided which, on the one hand, is fastened to the vehicle floor forming a first pivot axis (26), about which the backrest portion (8) may be pivoted into the second and third position and, on the other hand, is connected to the backrest portion (8) forming a second pivot axis (28), about which the backrest portion (8) may be pivoted into the first position.

6. Vehicle seat according to claim 5, **characterised in that** locking means (30; 48) are respectively provided to prevent pivoting about the first and second pivot axis (26; 28).

7. Vehicle seat according to either of claims 5 to 6, **characterised in that** the pivoting device (22) and the backrest portion (8) co-operate, such that the backrest portion (8) when pivoting from the first into the second position, may be pivoted only in one direction of rotation about the second pivot axis (28) from its orientation with the rear side (12) oriented upwardly.

8. Vehicle seat according to any one of claims 5 to 7, **characterised in that** the pivoting device (22) comprises a first limb (38) which is fastened to the vehicle floor, a second parallel limb (40) which is hingeably connected to the backrest portion (8) and a third and fourth limb (42; 44) which are arranged parallel to one another and are respectively connected, on the one hand, to the first limb (38) and, on the other hand, to the second limb (40).

9. Vehicle seat according to claim 8, **characterised in that** the second limb (40) comprises a stop element (46) which is guided in a guide (52) arranged about the second pivot axis (28) in the backrest portion, the stop element (46) and the guide (52) co-operating such that the backrest portion (8), in its orientation with the rear side (12) oriented upwardly, may be pivoted only in one direction of rotation about the second pivot axis (28).

10. Vehicle seat according to claim 9, **characterised in that** the stop element (46) and the guide (52) co-operate, such that the backrest portion (8), in the normal position, may be pivoted from its orientation only in one direction of rotation about the second pivot axis (28).

## Revendications

1. Siège arrière de véhicule automobile comprenant une partie d'assise (2) munie d'une face supérieure (4), et un dossier (6) présentant une face antérieure (10) et une face postérieure (12) tournée vers un espace libre situé derrière ledit siège arrière de véhicule automobile, ainsi qu'au moins un tronçon (8) de dossier, ledit tronçon (8) de dossier étant réalisé de façon telle qu'il puisse pivoter, depuis une position normale, vers une première position dans laquelle la face postérieure (12) dudit tronçon (8) de dossier est orientée vers le haut, et puisse en outre pivoter, avec sa face postérieure (12) orientée vers le haut, vers une deuxième position située dans l'espace libre placé derrière le siège de véhicule, **caractérisé par le fait que**, dans la deuxième position, la face supérieure (4) de la partie d'assise (2) non animée d'un mouvement conjoint, et la face postérieure (12) du tronçon (8) de dossier, forment une surface de chargement.

2. Siège arrière de véhicule automobile, selon la revendication 1, **caractérisé par le fait qu'**un panneau de chargement (18), agencé à pivotement sur la face postérieure (12) du tronçon (8) de dossier, peut pivoter vers la face supérieure (4) de la partie d'assise (2) dans la deuxième position dudit tronçon (8) de dossier.

3. Siège arrière de véhicule automobile, selon l'une des revendications 1 ou 2, **caractérisé par le fait que** le tronçon (8) de dossier comporte une paroi postérieure (8") et un accoudoir (36), sachant que, dans la position normale dudit tronçon (8) de dossier, ledit accoudoir (36) peut pivoter vers la face supérieure (4) de la partie d'assise (2), et ladite paroi postérieure (8'') peut pénétrer par pivotement dans l'espace libre.

4. Siège arrière de véhicule automobile, selon l'une des revendications précédentes, **caractérisé par le fait que** le tronçon (8) de dossier peut par ailleurs pivoter, depuis la position normale, vers une troisième position dans laquelle la face supérieure (4) de la partie d'assise (2) et la face antérieure (10) dudit tronçon (8) de dossier forment une surface de couchage.

5. Siège de véhicule automobile, selon l'une des revendications précédentes, **caractérisé par** la présence d'un dispositif de pivotement (22) qui, d'une part, est fixé au plancher du véhicule en matérialisant un premier axe de pivotement (26) autour duquel le tronçon (8) de dossier peut pivoter vers les deuxième et troisième positions ; et qui, d'autre part, est relié audit tronçon (8) de dossier en matérialisant un second axe de pivotement (28) autour duquel ledit tronçon (8) de dossier peut pivoter vers la première position.

6. Siège de véhicule automobile, selon la revendication 5, **caractérisé par le fait que** des moyens respectifs d'arrêt (30 ; 48) sont prévus pour interdire le pivotement autour des premier et second axes de pivotement (26 ; 28).

7. Siège de véhicule automobile, selon l'une des revendications 5 à 6, **caractérisé par le fait que** le dispositif de pivotement (22) et le tronçon (8) de dossier coopèrent de façon telle que, lors du pivotement de la première vers la deuxième position, ledit tronçon (8) de dossier ne puisse pivoter que dans un sens de rotation, autour du second axe de pivotement (28), à partir de son orientation dans laquelle sa face postérieure (12) est dirigée vers le haut.

8. Siège de véhicule automobile, selon l'une des revendications 5 à 7, **caractérisé par le fait que** le dispositif de pivotement (22) comporte une première branche (38) fixée au plancher du véhicule, une deuxième branche parallèle (40) reliée de manière articulée au tronçon (8) de dossier, et des troisième et quatrième branches (42 ; 44) qui sont agencées parallèlement l'une à l'autre et sont respectivement reliées, d'une part, à la première branche (38) et d'autre part à la deuxième branche (40).

9. Siège de véhicule automobile, selon la revendication 8, **caractérisé par le fait que** la deuxième branche (40) présente un élément de butée (46) guidé, dans le tronçon de dossier, dans un guide (52) disposé autour du second axe de pivotement (28), l'élément de butée (46) et le guide (52) coopérant de façon telle que, dans son orientation dans laquelle sa face postérieure (12) est dirigée vers le haut, ledit tronçon (8) de dossier ne puisse pivoter que dans un sens de rotation autour du second axe de pivotement (28).

10. Siège de véhicule automobile, selon la revendication 9, **caractérisé par le fait que** l'élément de butée (46) et le guide (52) coopèrent de façon telle que le tronçon (8) de dossier ne puisse pivoter à partir de son orientation, en position normale, que dans un sens de rotation autour du second axe de pivotement (28).
